(19) Europäisches Patentamt
European Patent Office
Office européen des brevets

(11) Publication number : 0 445 768 B1

(12) # EUROPEAN PATENT SPECIFICATION

(45) Date of publication of patent specification : **06.10.93 Bulletin 93/40**

(51) Int. Cl.$^5$ : **G03G 5/06**

(21) Application number : **91103402.3**

(22) Date of filing : **06.03.91**

(54) **Photoconductive material and electrophotographic photoreceptor using the same.**

(30) Priority : **06.03.90 JP 54379/90**

(43) Date of publication of application : **11.09.91 Bulletin 91/37**

(45) Publication of the grant of the patent : **06.10.93 Bulletin 93/40**

(84) Designated Contracting States : **DE FR GB**

(56) References cited :
**EP-A- 0 348 889**
**AU-A- 25 892**
**US-A- 3 160 510**
**WORLD PATENTS INDEX LATEST Section Ch, Week 8511, Derwent Publications Ltd., London, GB; Class E, AN 85-06458 & JP-A-60 019 153 (HITACHI K.K.) 31 January 1985**
**PATENT ABSTRACTS OF JAPAN vol. 12, no. 499 (P-807)(3346) 27 December 1988 ( SHARP CORP. ) 30 August 1988 & JP-A-63 208 849**
**PATENT ABSTRACTS OF JAPAN vol. 12, no. 470 (P-798)(3317) 9 December 1988 ( SHARP CORP. ) 5 August 1988 & JP-A-63 189 870**
**PATENT ABSTRACTS OF JAPAN vol. 12, no. 470 (P-798)(3317) 9 December 1988 ( SHARP CORP. ) 5 August 1988 & JP-A-63 189 871**

(73) Proprietor : **MITSUBISHI PETROCHEMICAL CO., LTD.**
**5-2, Marunouchi 2-chome**
**Chiyoda-ku Tokyo (JP)**

(72) Inventor : **Suzuki, Shinichi**
**c/o Mitsubishi Petr. Co., Ltd., 3-1, Chuo 8-chome**
**Ami-machi, Inashiki-gun, Ibaraki (JP)**
Inventor : **Gouda, Junko**
**c/o Mitsubishi Petr. Co., Ltd., 3-1, Chuo 8-chome**
**Ami-machi, Inashiki-gun, Ibaraki (JP)**
Inventor : **Ishibashi, Toshiaki**
**c/o Mitsubishi Petr. Co., Ltd., 3-1, Chuo 8-chome**
**Ami-machi, Inashiki-gun, Ibaraki (JP)**
Inventor : **Itsubo, Akira**
**c/o Mitsubishi Petr. Co., Ltd., 3-1, Chuo 8-chome**
**Ami-machi, Inashiki-gun, Ibaraki (JP)**
Inventor : **Jimbo, Tomoko**
**c/o Mitsubishi Petr. Co., Ltd., 3-1, Chuo 8-chome**
**Ami-machi, Inashiki-gun, Ibaraki (JP)**
Inventor : **Ohashi, Toyoshi**
**c/o Mitsubishi Petr. Co., Ltd., 3-1, Chuo 8-chome**
**Ami-machi, Inashiki-gun, Ibaraki (JP)**

(74) Representative : **Hansen, Bernd, Dr. Dipl.-Chem. et al**
**Hoffmann, Eitle & Partner Patent- und Rechtsanwälte, Postfach 81 04 20**
**D-81904 München (DE)**

**EP 0 445 768 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to an organic photoconductive material and its use. More particularly, the invention relates to an organic photoconductive material having high sensitivity to visible light and an electrophotographic photoreceptor using the same.

The photoconductive material of the present invention is useful as a charge generating material of photo sensors, solar cells, or electrophotographic photoreceptors having photosensitivity in the wavelength region of from 350 to 650 nm. In particular, the photoconductive material of the invention functions as a carrier generating material to provide an electrophotographic photoreceptor having stability to heat and light and high sensitivity which is of wide use in electrophotographic equipment, e.g., copying machines and printers.

## BACKGROUND OF THE INVENTION

Photoconductive materials have been intensively studied for use in electrophotographic photoreceptors, various kinds of sensors, and camera tubes and actually put into practical use in these fields.

Known inorganic photoconductive materials include amorphous selenium, amorphous silicon, cadmium chloride, zinc oxide, and selenium-arsenic alloys. Known organic photoconductive materials include low-molecular weight materials, e.g., carbazole compounds, anthracene compounds, pyrazoline compounds, oxadiazole compounds, and hydrazone compounds; and organic pigments and dyes, e.g., phthalocyanine pigments, azo pigments, cyanine dyes, polycyclic quinone pigments, perylene pigments, and indigo dyes.

Electrophotographic photoreceptors having a photosensitive layer mainly comprising an inorganic photoconductive material have been widely spread, but they are not necessarily satisfactory in sensitivity, heat resistance or printing durability.

On the other hand, electrophotographic photoreceptors having a photosensitive layer mainly comprising an organic photoconductive compound have many advantages, such as relative ease of preparation, cheapness, freedom from environmental pollution, and ease of handling. In particular, recent attempts have been directed to development of a high performance organic photoreceptor in which a carrier generating function and a carrier transporting function are separately performed by different substances as disclosed, e.g., in JP-A-60-67949 (the term "JP-A" as used herein means an "unexamined published Japanese patent application"), and photoreceptors having such a separate function type photoconductive layer have attracted much attention. In this connection, it has been proposed to combine a quinacridone pigment as a carrier generating substance with a hydrazine compound as a carrier transporting substance to provide a photoreceptor having excellent characteristics as disclosed in JP-A-61-151543.

AU-A-25892 discloses an electrophotographic member having a particular arrangement of photosensitive layers. At least one of these layers includes a photo-injecting quinacridone pigment as a photosensitive material. It is also noted that it is possible to use certain physical mixtures of quinadridone compounds but such mixtures do not constitute a mixed crystal.

EP-A-0 348 889 discloses a photoconductive material which comprises a mixed crystal of a combination of at least two different phthalocyanine compounds. This photoconductive material can be used as a photosensitive layer as a component of an electrophotographic photoreceptor.

US-A-3 160 510 discloses a quinacridone mixed crystal composition which is noted to have light fastness and unpredictable colour.

Under the present situation, however, the conventional organic photoconductive compounds, some of them having been put into practical use, are not always satisfactory in characteristics required for use, e.g., in electrophotographic photoreceptors, such as sensitivity, residual potential, and stability on repeated use.

## SUMMARY OF THE INVENTION

An object of the present invention is to provide a highly sensitive organic photoconductive material which is stable to heat or light and excellent in carrier generating ability.

Another object of the present invention is to provide an electrophotographic photoreceptor using the above-described photoconductive material.

The present invention provides a photoconductive material crystal of a combination of at least two quinacridone compounds represented by formula (I):

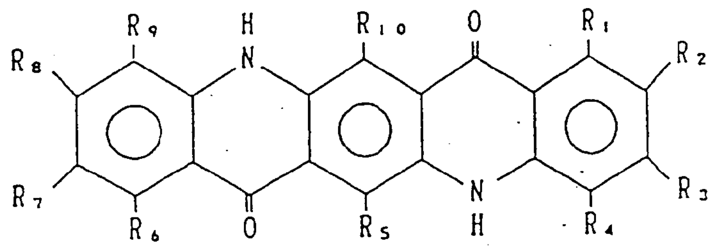

(I)

wherein $R_1$, $R_2$, $R_3$, $R_4$, $R_5$, $R_6$, $R_7$, $R_8$, $R_9$, and $R_{10}$ each represents a hydrogen atom, a halogen atom, a hydroxyl group, a cyano group, a nitro group, an alkyl group, an alkoxy group, an amino group, a sulfo group, a carboxyl group, an alkylamino group, or a halogenated alkyl group, as a charge generating component of a photoconductive material; and an electrophotographic photoreceptor using the same.

## BRIEF DESCRIPTION OF THE DRAWING

Figure 1 shows an X-ray diffraction pattern of the quinacridone mixed crystal obtained in Example 1 and that of a comparative quinacridone mixture.

Figures 2 and 3 each show an X-ray diffraction pattern of the treated mixed crystal obtained in Examples 4 and 7, respectively.

## DETAILED DESCRIPTION OF THE INVENTION

In formula (I), the alkyl group, alkoxy group, an alkylamino group, and halogenated alkyl group usually contain from 1 to 10 carbon atoms, and preferably from 1 to 5 carbon atoms.

Specific examples of the quinacridone compounds represented by formula (I) include quinacridone, 3-methylquinacridone, 2-chloroquinacridone, 4-chloroquinacridone, 2,9-dimethylquinacridone, 2,9-dimethoxyquinacridone, 2,9-dichloroquinacridone, 3,10-dimethylquinacridone, 4,11-dimethylquinacridone, 3,10-dichloroquinacridone, 2,3-dichloroquinacridone, 4,11-dichloroquinacridone, 2,9-difluoroquinacridone, 2,8-dichloroquinacridone, 6,13-dichloroquinacridone, 3,10-dimethoxyquinacridone, 4,11-dimethoxyquinacridone, 2-chloro-4-methylquinacridone, 2,9-dichloro-4,11-dimethylquinacridone, 2,10-dimethyl-6,13-dichloroquinacridone, 2,10-dichloro-6,13-dihydroquinacridone, 2,9-dimethoxy-6,13-dihydroquinacridone, 2,9-dimethyl-6,13-dihydroquinacridone, 4,11-dimethyl-6,13-dihydroquinacridone, 3,4,10,11-tetrachloroquinacridone, 1,4,8,11-tetrafluoroquinacridone, 2,4,9,11-tetramethylquinacridone, 1,2,4,8,9,11-hexachloroquinacridone, and 2,4,9,11-tetramethoxyquinacridone.

The photoconductive material according to the present invention comprises a mixed crystal of a combination of two or more of the quinacridone compounds represented by formula (I). While a combination of two or more quinacridone compounds is not particularly limited, it is preferable to use compounds whose substituents have a small molecular volume. For example, it is preferable to make a combination from an unsubstituted compound (i.e., quinacridone) and compounds substituted with a halogen atom, a hydroxyl group, a cyano group, a nitro group, an alkyl group having 1 or 2 carbon atoms, an alkoxy group having 1 or 2 carbon atoms, or an amino group. Examples of preferred combinations are combinations of two quinacridone compounds such as a combination of quinacridone and 2,9-dimethylquinacridone or 2,9-dichloroquinacridone, a combination of 2,9-dimethylquinacridone and 2,9-dichloroquinacridone, a combination of 3,10-dichloroquinacridone and 2,9-dimethoxyquinacridone. In case of combining two compounds, a mixing ratio of the two compounds is arbitrary, and one of them ranges usually from 0.01 to 99.9%, preferably from 10 to 90%, and more preferably from 25 to 75%.

A method for preparing the mixed crystal which can be used in the present invention is not particularly restricted. For example, two or more quinacridone compounds are vaporized simultaneously or separately by heating to a sublimation temperature or higher in vacuo of not more than 0.13 kPa (1 Torr), preferably not more than 13.3 Pa (0.1 Torr), and more preferably not more than 0.013 Pa (1 x $10^{-4}$ Torr), and the vapors are recoagulated on a substrate at a temperature below the sublimation temperature.

Apparatus for carrying out sublimation in vacuo include a vacuum evaporation apparatus and a sublimation furnace.

Besides heating, vaporization of quinacridone compounds may also be conducted by striking accelerated particles against quinacridone compounds. In this case, a sputtering apparatus is employed.

A mixed crystal can also be obtained by dissolving two or more quinacridone compounds in a solubilizing

agent, e.g., sulfuric acid, and re-precipitating the compounds in a poor solvent, such as water. The formed precipitate may be vaporized by heating to a sublimation temperature or higher by the above-mentioned method to be re-coagulated on a substrate.

The terminology "mixed crystal" as used herein means a mixture of two or more quinacridone compounds on a molecular level. Such a mixed crystal is divided into the following two groups according to behaviors in X-ray diffractometry.

(1) Mixed crystals of two quinacridone compounds having similar crystal structures:

The X-ray diffraction pattern of mixed crystals of this type shows a chief peak at an angle of diffraction in the middle of the two chief peaks of the two quinacridone compounds used as raw materials.

(2) Mixed crystals of two quinacridone compounds having greatly different crystal structures:

The X-ray diffraction pattern of mixed crystals of this type shows a new peak in addition to the peaks assigned to the two quinacridone compounds used as raw materials, with the peak of each compound being slightly shifted.

Accordingly, the mixed crystals differ from mere physical mixtures of the quinacridone compounds.

It is preferable that the thus obtained quinacridone mixed crystal be further treated with an alkylsulfuric acid or an organic solvent to obtain a mixed crystal having a new and different crystal form which exhibits more excellent characteristics as a photoconductive material.

Examples of suitable alkylsulfuric acids include methylsulfuric acid, ethylsulfuric acid, propylsulfuric acid, and halogenated alkylsulfuric acids, e.g., trifluoromethylsulfuric acid and trichloromethylsulfuric acid, with methylsulfuric acid and ethylsulfuric acid being preferred.

Examples of suitable organic solvents include those having a boiling point of 100°C or higher, e.g., dimethylformamide, dimethylacetamide, N-methylpyrrolidone, pyrrole, pyridine, nitrobenzene, quinoline, and dimethyl sulfoxide, and preferably those having a boiling point of 120°C or higher.

Treating with an alkylsulfuric acid is carried out, for example, by dissolving a mixed crystal in an alkylsulfuric acid and then re-precipitated in a poor solvent, such as water. An alkylsulfuric acid is used preferably in an amount of from 3 to 50 parts by weight, and more preferably from 5 to 20 parts by weight, per part by weight of a mixed crystal. The temperature for dissolving preferably ranges from 0° to 100°C, and more preferably from 20° to 50°C. The time for dissolving preferably ranges from 0.5 to 10 hours, and more preferably from 1 to 5 hours. The amount of a poor solvent to be used is preferably from 2 to 50 parts by weight, and more preferably from 5 to 20 parts by weight, per part by weight of the alkylsulfuric acid.

Treatment with an organic solvent can be carried out, for example, by dispersing a mixed crystal in an organic solvent, followed by heating. The organic solvent is used preferably in an amount of from 10 to 100 parts by weight, and more preferably from 20 to 50 parts by weight, per part by weight of a mixed crystal. The heating temperature preferably ranges from 100° to 200°C, and more preferably from 120° to 160°C. The heating time preferably ranges from 1 to 50 hours, and more preferably from 5 to 24 hours. After filtration of the dispersion, the filter cake is dried to obtain a new mixed crystal.

When compared with a mixed crystal before the treatment, the thus obtained new mixed crystal has a broader or sharper peak and an additional peak in its X-ray diffraction pattern.

While improvements in characteristics as a photoconductive material can be brought about by the treatment with either an alkylsulfuric acid or an organic solvent, the mixed crystal obtained by the treatment with an alkylsulfuric acid is superior in characteristics and therefore preferred.

The mixed crystal thus obtained functions as a photoconductive material by itself, but may be used in combination with quinacridone compounds used as raw materials.

If desired, the mixed crystal may be press-molded, or the mixed crystal is finely divided by means of a ball mill, etc. and dispersed in an appropriate solvent together with, if necessary, a binder, and the dispersion is coated on a substrate and dried to form a photoconductive layer.

Binders to be used are arbitrarily selected, but high-molecular weight polymers capable of forming an electrically insulating film having a high dielectric constant are preferred. Examples of such polymers include polycarbonate, polyester, methacrylic resins, acrylic resins, polyvinyl chloride, polyvinylidene chloride, polystyrene, polyvinyl acetate, styrene-butadiene copolymers, vinylidene chloride-acrylonitrile copolymers, vinyl chloride-vinyl acetate copolymers, vinyl chloride-vinyl acetate-maleic anhydride copolymers, silicone resins, silicone-alkyd resins, phenol formaldehyde resins, styrene-alkyd resins, poly-N-vinylcarbazole, and polyvinyl butyral.

The electrophotographic photoreceptor according to the present invention comprises a conductive support

having thereon a photosensitive layer containing at least one of the above-described quinacridone mixed crystals as a carrier generating substance. The electrophotographic photoreceptor may have any of known physical structures. For example, it may comprise a conductive support having thereon a carrier generating layer mainly comprising the quinacridone mixed crystal of the present invention as a carrier generating material and a carrier transporting layer mainly comprising a carrier transporting material, or it may comprise a conductive support having thereon a photosensitive layer comprising a carrier transporting material having dispersed therein the quinacridone mixed crystal of the invention.

An intermediate layer may be provided between these layers or between the layer and the support. Various structures disclosed in JP-A-60-67949 are applicable.

Suitable conductive supports which can be used in the present invention include a metallic plate, a metallic drum, and an insulating support, e.g., paper, a plastic film, etc., having provided thereon a conductive thin film made of a conductive polymer, a conductive compound (e.g., indium oxide), or a metal (e.g., aluminum, palladium, gold) by coating, depositing, laminating or a like means.

A carrier generating layer is preferably formed by finely dividing a quinacridone mixed crystal by a ball mill, etc., dispersing the particles in an appropriate solvent, dissolving, if desired, a binder resin in the dispersion, and coating the dispersion on a conductive support either directly or via an intermediate layer or on a carrier transporting layer having been previously formed on a conductive support, followed by drying. The fine particles of the quinacridone mixed crystal preferably have a particle size of not more than 5 μm, and more preferably not more than 1 μm.

The carrier generating layer usually has a thickness of from 0.01 to 20 μm, and preferably from 0.05 to 5 μm. The proportion of the quinacridone mixed crystal in the carrier generating layer is from 10 to 100% by weight, and preferably from 30 to 95% by weight.

The carrier transporting layer can be formed by dissolving a carrier transporting material in an appropriate solvent, coating the solution on a support, and dried. Specific but non-limiting examples of carrier transporting materials which can be used in the present invention include electron-accepting substances, e.g., trinitrofluorenone and tetranitrofluorenone; polymers having a heterocyclic moiety in the side chain thereof, e.g., poly-N-vinylcarbazole; and positive hole transporting electron-donating substances, e.g., triazole derivatives, oxadiazole derivatives, imidazole derivatives, pyrazoline derivatives, polyarylalkane derivatives, phenylenediamine derivatives, hydrazone derivatives, amino-substituted chalcone derivatives, triarylamine derivatives, carbazole derivatives, and stilbene derivatives.

The carrier transporting layer has a thickness usually of from 1 to 100 μm, and preferably from 5 to 50 μm.

A binder which may be employed in the carrier generating layer or carrier transporting layer is selected from those commonly used in a photoconductor.

A dispersion type photosensitive layer having a carrier generating function combined with a carrier transporting function can be formed by dissolving or dispersing a carrier transporting material in the above-mentioned coating composition for forming a carrier generating layer and coating the resulting composition on a conductive support or an intermediate layer previously provided on a conductive support.

Any techniques known in the art can be applied to the electrophotographic photoreceptor of the present invention. For example, the photosensitive layer may contain a third component, such as a sensitizer. Suitable sensitizers include Lewis acids capable of forming a charge transfer complex with an organic photoconductive substance and dyestuffs. A plasticizer may be incorporated into the photosensitive layer in order to improve film-forming properties, flexibility, and mechanical strength.

The present invention is now illustrated in greater detail by way of Examples, but it should be understood that the present invention is not deemed to be limited thereto.

## EXAMPLE 1

(1) Preparation of Quinacridone Mixed Crystal:

In 50 mℓ of sulfuric acid were dissolved 1.8 mmol of unsubstituted quinacridone and 1.8 mmol of 2,9-dimethylquinacridone. After removing any insoluble matter by filtration, the solution was poured into 600 mℓ of water for re-precipitation.

The precipitated powder was thoroughly washed with large quantities of water and ethanol and dried at 70°C in vacuo to obtain a molecular mixture.

An X-ray diffraction pattern of the resulting molecular mixture is shown in Figure 1 together with, for reference, that of a mixture of equimolecular amounts of quinacridone and 2,9-dimethylquinacridone which was obtained by merely mixing in an agate mortar.

It is seen that the powder according to the present invention has one crystal form in which two quinacridone

compounds are mixed on a molecular level.

(2) Preparation of Electrophotographic Photoreceptor:

To 2.5 mℓ of tetrahydrofuran were added 50 mg of the quinacridone mixed crystal obtained in (1) above and 50 mg of a polycarbonate resin ("Iupilon E-2000", produced by Mitsubishi Gas Chemical Industries Ltd.), and the mixture was dispersed in a ball mill for 12 hours. The dispersion was coated on an aluminum plate to a dry thickness of 1 μm to form a carrier generating layer.

A solution of 200 mg of p-diethylaminobenzaldehyde diphenylhydrazone and 200 mg of "Iupilon E-2000" in 2.5 mℓ of tetrahydrofuran was coated on the carrier generating layer to a dry thickness of 15 μm to form a carrier transporting layer to thereby produce an electrophotographic photoreceptor.

EXAMPLE 2

A quinacridone mixed crystal was prepared in the same manner as in Example 1-(1), except for replacing 2,9-dimethylquinacridone with 2,9-dichloroquinacridone.

An electrophotographic photoreceptor was prepared in the same manner as in Example 1-(2) by using the resulting mixed crystal.

EXAMPLE 3

(1) Preparation of Quinacridone Mixed Crystal:

A bell jar type vacuum evaporation apparatus having two tungsten boats was used. To each of the tungsten boats was put 100 mg of unsubstituted quinacridone and 100 mg of 2,9-dimethylquinacridone, and the vacuum chamber was evacuated to 2.7 x $10^{-3}$ Pa (2 x $10^{-5}$ Torr). Each evaporation source was heated and, after the heating temperature was controlled so as to obtain a rate of deposition of 20 nm/min (200 Å/min) (as measured with a film thickness monitor), a shutter was opened, and vapors were built up on an aluminum substrate set at room temperature to a thickness of 200 nm (2000 Å).

(2) Preparation of Electrophotographic Photoreceptor:

On the quinacridone deposit thus formed was coated a solution of 200 mg of p-diethylaminobenzaldehyde diphenylhydrazone as a carrier transporting substance and 200 mg of "Iupilon E-2000" in 2.5 mℓ of tetrahydrofuran to a dry thickness of 15 μm to thereby obtain an electrophotographic photoreceptor.

COMPARATIVE EXAMPLES 1 TO 3

Two kinds of the quinacridone compounds used in Examples 1 to 3 were ground and well mixed in a mortar to prepare a mere physical mixture of unsubstituted quinacridone and 2,9-dimethylquinacridone (Comparative Example 1), a mere physical mixture of unsubstituted quinacridone and 2,9-dichloroquinacridone (Comparative Example 2), and a mere physical mixture of 2,9-dimethylquinacridone and 2,9-dichloroquinacridone (Comparative Example 3).

An electrophotographic photoreceptor was prepared in the same manner as in Example 1-(2) by using each of the resulting mere physical mixtures.

EXAMPLE 4

(1) Preparation of Quinacridone Mixed Crystal:

In 50 g of methylsulfuric acid was dissolved 5.0 g of the mixed crystal obtained in Example 1-(1) and then re-precipitated in 375 mℓ of water. The resulting powder was thoroughly washed with a large quantity of water and dried at 70°C in vacuo to obtain a new mixed crystal. An X-ray diffraction pattern of the resulting mixed crystal is shown in Figure 2.

(2) Preparation of Electrophotographic Photoreceptor:

An electrophotographic photoreceptor was prepared by using the mixed crystal obtained in (1) above in

the same manner as in Example 1-(2).

EXAMPLE 5

A new mixed crystal was prepared in the same manner as in Example 4-(1), except for starting with the mixed crystal obtained in Example 2-(1).

An electrophotographic photoreceptor was prepared by using the resulting mixed crystal in the same manner as in Example 1-(2).

EXAMPLE 6

A mixed crystal was prepared in the same manner as in Example 1-(1), except for replacing the unsubstituted quinacridone as used in Example 1 with 2,9-dichloroquinacridone.

A new mixed crystal was prepared from the above-prepared mixed crystal in the same manner as in Example 4-(1).

An electrophotographic photoreceptor was prepared by using the resulting new mixed crystal in the same manner as in Example 1-(2).

EXAMPLE 7

(1) Preparation of Quinacridone Mixed Crystal:

In 200 mℓ of dimethylformamide was dispersed 5.0 g of the mixed crystal obtained in Example 1-(1), and the dispersion was heated at 140°C for 5 hours, followed by filtration. The filter cake was thoroughly washed with ethanol and dried at 70°C in vacuo to obtain a new mixed crystal. An X-ray diffraction pattern of the resulting mixed crystal is shown in Figure 3.

(2) Preparation of Electrophotographic Photoreceptor:

An electrophotographic photoreceptor was prepared by using the resulting new mixed crystal in the same manner as in Example 1-(2).

Evaluation:

Electrophotographic characteristics of the electrophotographic photoreceptors obtained in the foregoing Examples and Comparative Examples were evaluated as follows.

The photoreceptor was charged to -6 kV with a corona discharge by using an apparatus for evaluating a photoreceptor drum ("Cynthia-55" produced by Gentec Co., Ltd.). An initial surface potential after 10 seconds' dark decay was measured.

Separately, the photoreceptor was charged in dark with a corona discharge, maintained in dark for 10 seconds, and then exposed to monochromatic light having a wavelength of 580 nm isolated from tungsten light through an interference filter. The time (sec) required for reducing the initial surface potential by half was measured to calculate a half decay exposure amount ($cm^2/\mu J$).

The results of these measurements are shown in Table 1 below.

TABLE 1

| Example No. | Initial Surface Potential (V) | Exposure Amount at 580 nm ($cm^2/\mu J$) |
|---|---|---|
| Example 1 | 480 | 400 |
| Example 2 | 420 | 160 |
| Example 3 | 380 | 100 |
| Comparative Example 1 | 300 | 70 |
| Comparative Example 2 | 280 | 50 |
| Comparative Example 3 | 290 | 30 |
| Example 4 | 700 | 1500 |
| Example 5 | 680 | 1000 |
| Example 6 | 690 | 900 |
| Example 7 | 640 | 900 |

While the invention has been described in detail and with reference to specific examples thereof, it will be apparent to one skilled in the art that various changes and modifications can be made therein without departing from the scope thereof.

## Claims

1. The use of a mixed crystal of a combination of at least two quinacridone compounds represented by formula (I):

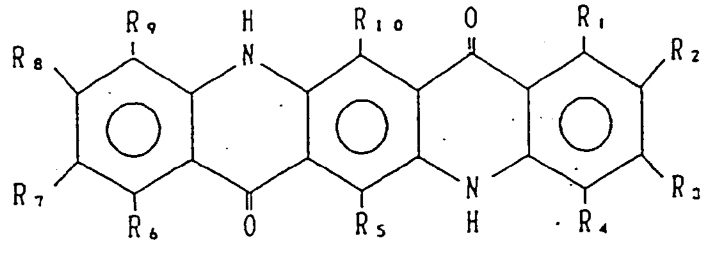

(I)

wherein $R_1$, $R_2$, $R_3$, $R_4$, $R_5$, $R_6$, $R_7$, $R_6$, $R_9$, and $R_{10}$ each represents a hydrogen atom, a halogen atom, a hydroxyl group, a cyano group, a nitro group, an alkyl group, an alkoxy group, an amino group, a sulfo group, a carboxyl group, an alkylamino group, or a halogenated alkyl group as a charge generating component of a photoconductive material.

2. The use according to Claim 1, wherein said mixed crystal is a mixed crystal obtained by vaporizing at least two quinacridone compounds represented by formula (I) at a sublimation temperature or higher in vacuo and re-coagulating the vapor on a substrate.

3. The use according to Claim 1, wherein said mixed crystal is a mixed crystal obtained by dissolving at least two quinacridone compounds represented by formula (I) in a solubilizing agent and then re-precipitating them in a poor solvent.

4. The use according to Claim 1, wherein said mixed crystal is a mixed crystal obtained by vaporizing at least two quinacridone compounds represented by formula (I) at a sublimation temperature or higher in vacuo, re-coagulating the vapor on a substrate to form a mixed crystal, and then treating the resulting mixed crystal in an alkylsulfuric acid or an organic solvent.

5. The use according to Claim 1, wherein said mixed crystal is a mixed crystal obtained by dissolving at least two quinacridone compounds represented by formula (I) in a solubilizing agent, re-precipitating them in a poor solvent to form a mixed crystal, and then treating the resulting mixed crystal in an alkylsulfuric acid or an organic solvent.

6. The use according to Claim 1, wherein said quinacridone compounds are selected from quinacridone, 3-methylquinacridone, 2-chloroquinacridone, 4-chloroquinacridone, 2,9-dimethylquinacridone, 2,9-dimethoxyquinacridone, 2,9-dichloroquinacridone, 3,10-dimethylquinacridone, 4,11-dimethylquinacridone, 3,10-dichloroquinacridone, 2,3-dichloroquinacridone, 4,11-dichloroquinacridone, 2,9-difluoroquinacridone, 2,8-dichloroquinacridone, 6,13-dichloroquinacridone, 3,10-dimethoxyquinacridone, 4,11-dimethoxyquinacridone, 2-chloro-4-methylquinacridone, 2,9-dichloro-4,11-dimethylquinacridone, 2-10-dimethyl-6,13-dichloroquinacridone, 2,10-dichloro-6,13-dihydroquinacridone, 2,9-dimethyl-6,13-dihydroquinacridone, 2,9-dimethyl-6,13-dihydroquinacridone, 4,11-dimethyl-6,13-dihydroquinacridone, 3,4,10,11-tetrachloroquinacridone, 1,4,8,11-tetrafluoroquinacridone, 2,4,9,11-tetramethylquinacridone, 1,2,4,8,9,11-hexachloroquinacridone, and 2,3,9,11-tetramethoxyquinacridone.

7. The use according to Claim 1, wherein said combination of at least two quinacridone compounds is a combination of unsubstituted quinacridone and 2,9-dimethylquinacridone or 2,9-dichloroquinacridone, a combination of 2,9-dimethylquinacridone and 2,9-dichloroquinacridone, or a combination of 3,10-dichloroquinacridone and 2,9-dimethoxyquinacridone.

8. An electrophotographic photoreceptor comprising a support having thereon a photosensitive layer containing a mixed crystal of a combination of at least two quinacridone compounds represented by formula (I):

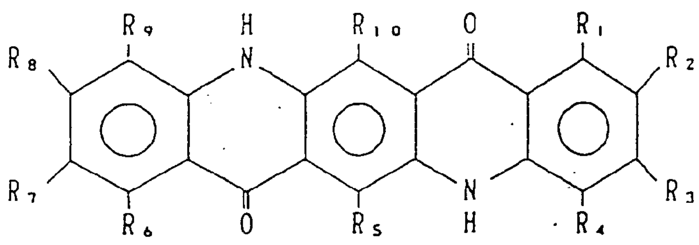

(I)

wherein $R_1$, $R_2$, $R_3$, $R_4$, $R_5$, $R_6$, $R_7$, $R_6$, $R_9$, and $R_{10}$ each represents a hydrogen atom, a halogen atom, a hydroxyl group, a cyano group, a nitro group, an alkyl group, an alkoxy group, an amino group, a sulfo group, a carboxyl group, an alkylamino group, or a halogenated alkyl group.

9. An electrophotographic photoreceptor as claimed in Claim 8, wherein said mixed crystal is a mixed crystal obtained by vaporizing at least two quinacridone compounds represented by formula (I) at a sublimation temperature or higher in vacuo and re-coagulating the vapor on a substrate.

10. An electrophotographic photoreceptor as claimed in Claim 8, wherein said mixed crystal is a mixed crystal obtained by dissolving at least two quinacridone compounds represented by formula (I) in a solubilizing agent and then re-precipitating them in a poor solvent.

11. An electrophotographic photoreceptor as claimed in Claim 8, wherein said mixed crystal is a mixed crystal obtained by vaporizing at least two quinacridone compounds represented by formula (I) at a sublimation temperature or higher in vacuo, re-coagulating the vapor on a substrate to form a mixed crystal, and then treating the resulting mixed crystal in an alkylsulfuric acid or an organic solvent.

12. An electrophotographic photoreceptor as claimed in Claim 8, wherein said mixed crystal is a mixed crystal obtained by dissolving at least two quinacridone compounds represented by formula (I) in a solubilizing agent, re-precipitating them in a poor solvent to form a mixed crystal, and then treating the resulting mixed crystal in an alkylsulfuric acid or an organic solvent.

13. An electrophotographic photoreceptor as claimed in Claim 8, wherein said quinacridone compounds are selected from quinacridone, 3-methylquinacridone, 2-chloroquinacridone, 4-chloroquinacridone, 2,9-dimethylquinacridone, 2,9-dimethoxyquinacridone, 2,9-dichloroquinacridone, 3,10-dimethylquinacridone, 4,11-dimethylquinacridone, 3,10-dichloroquinacridone, 2,3-dichloroquinacridone, 4,11-dichloroquinacridone, 2,9-difluoroquinacridone, 2,8-dichloroquinacridone, 6,13-dichloroquinacridone, 3,10-dimethoxyquinacridone, 4,11-dimethoxyquinacridone, 2-chloro-4-methylquinacridone, 2,9-dichloro-4,11-dimethylquinacridone, 2,10-dimethyl-6,13-dichloroquinacridone, 2,10-dichloro-6,13-dihydroquinacridone, 2,9-dimethyl-6,13-dihydroquinacridone, 2,9-dimethyl-6,13-dihydroquinacridone, 4,11-dimethyl-6,13-dihydroquinacridone, 3,4,10,11-tetrachloroquinacridone, 1,4,8,11-tetrafluoroquinacridone, 2,4,9,11-tetramethylquinacridone, 1,2,4,8,9,11-hexachloroquinacridone, and 2,4 ,9,11-tetramethoxyquinacridone.

14. An electrophotographic photoreceptor as claimed in Claim 8, wherein said combination of at least two quinacridone compounds is a combination of unsubstituted quinacridone and 2,9-dimethylquinacridone or 2,9-dichloroquinacridone, a combination of 2,9-dimethylquinacridone and 2,9-dichloroquinacridone, or a combination of 3,10-dichloroquinacridone and 2,9-dimethoxyquinacridone.

**Patentansprüche**

1. Verwendung eines gemischten Kristalls aus einer Kombination von zumindest zwei Chinacridonverbindungen, dargestellt durch die Formel (I)

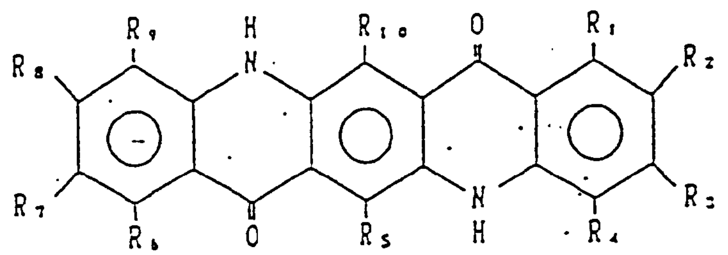

(I)

worin $R_1$, $R_2$, $R_3$, $R_4$, $R_5$, $R_6$, $R_7$, $R_8$, $R_9$ und $R_{10}$ jeweils ein Wasserstoffatom, ein Halogenatom, eine Hydroxylgruppe, eine Cyanogruppe, eine Nitrogruppe, eine Alkylgruppe, eine Alkoxygruppe, eine Aminogruppe, eine Sulfogruppe, eine Carboxylgruppe, eine Alkylaminogruppe oder eine halogenierte Alkylgruppe bedeuten, als eine ladungserzeugende Komponente eines photoleitenden Materials.

2. Verwendung nach Anspruch 1, dadurch gekennzeichnet, daß der gemischte Kristall ein gemischter Kristall ist, erhalten durch Verdampfen von zumindest zwei Chinacridonverbindungen, dargestellt durch die Formel (I), bei eienr Sublimationstemperatur oder höher im Vakuum und durch Rekoagulieren des Dampfes auf einem Substrat.

3. Verwendung nach Anspruch 1, dadurch gekennzeichnet, daß der gemischte Kristall ein gemischter Kristall ist, erhalten durch Auflösen von zumindest zwei Chinacridonverbindungen, dargestellt durch die Formel (I), in einem Lösungsmittel und anschließendes erneutes Ausfällen in einem armen Lösungsmittel.

4. Verwendung nach Anspruch 1, dadurch gekennzeichnet, daß der gemischte Kristall ein gemischter Kristall ist, erhalten durch Verdampfen von zumindest zwei Chinacridonverbindungen, dargestellt durch die Formel (I), bei einer Sublimationstemperatur oder höher im Vakuum, durch Rekoagulieren des Dampfes auf einem Substrat, zur Bildung eines gemischten Kristalls und durch anschließendes Behandeln des resultierenden gemischten Kristalls in einer Alkylschwefelsäure oder einem organischen Lösungsmittel.

5. Verwendung nach Anspruch 1, dadurch gekennzeichnet, daß der gemischte Kristall ein gemischter Kristall ist, erhalten durch Auflösen von zumindest zwei Chinacridonverbindungen, dargestellt durch die Formel

(I), in einem Lösungsmittel, erneutes Ausfällen dieser Verbindung in einem armen Lösungsmittel zur Bildung eines gemischten Kristalls und anschließendes Behandeln des resultierenden gemischten Kristalls in einer Alkylschwefelsäure oder einem organischen Lösungsmittel.

6. Verwendung nach Anspruch 1, dadurch gekennzeichnet, daß die Chinacridonverbindungen ausgewählt werden aus Chinacridon, 3-Methylchinacridon, 2-Chlorochinacridon, 4-Chlorochinacridon, 2,9-Dimethylchinacridon, 2,9-Dimethoxychinacridon, 2,9-Dichlorochinacridon, 3,10-Dimethylchinacridon, 4,11-Dimethylchinacridon, 3,10-Dichlorochinacridon, 2,3-Dichlorochinacridon, 4,11-Dichlorochinacridon, 2,9-Difluorochinacridon, 2,8-Dichlorochinacridon, 6,13-Dichlorochinacridon, 3,10-Dimethoxychinacridon, 4,11-Dimethoxychinacridon, 2-Chloro-4-methylchinacridon, 2,9-Dichloro-4,11-dimethylchinacridon, 2, 10-Dimethyl-6,13-dichlorochinacridon, 2,10-Dichloro-6,13-dihydrochinacridon, 2,9-Dimethyl-6,13-dihydrochinacridon, 2,9-Dimethyl-6,13-dihydrochinacridon, 4,11-Dimethyl-6,13-dihydrochinacridon, 3,4,10, 11-Tetrachlorochinacridon, 1,4,8,11-Tetrafluorochinacridon, 2,4,9,11-Tetramethylchinacridon, 1,2,4,8,9, 11-Hexachlorochinacridon und 2,4,9,11-Tetramethoxychinacridon.

7. Verwendung nach Anspruch 1, dadurch gekennzeichnet, daß die Kombination von zumindest zwei Chinacridonverbindungen eine Kombination aus unsubstituiertem Chinacridon und 2,9-Dimethylchinacridon oder 2,9-Dichlorochinacridon, eine Kombination aus 2,9-Dimethylchinacridon und 2,9-Dichlorochinacridon oder eine Kombination aus 3,10-Dichlorochinacridon und 2,9-Dimethoxychinacridon ist.

8. Elektrophotographischer Photorezeptor, umfassend einen Träger, der darauf eine photoempfindliche Schicht aufweist, die einen gemischten Kristall aus einer Kombination von zumindest zwei Chinacridonverbindungen enthält, dargestellt durch die Formel (I)

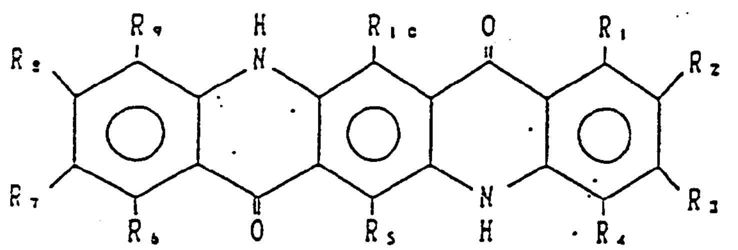

(I)

worin $R_1$, $R_2$, $R_3$, $R_4$, $R_5$, $R_6$, $R_7$, $R_8$, $R_9$ und $R_{10}$ jeweils ein Wasserstoffatom, ein Halogenatom, eine Hydroxylgruppe, eine Cyanogruppe, eine Nitrogruppe, eine Alkylgruppe, eine Alkoxygruppe, eine Aminogruppe, eine Sulfogruppe, eine Carboxylgruppe, eine Alkylaminogruppe oder eine halogenierte Alkylgruppe bedeuten.

9. Elektrophotographischer Photorezeptor nach Anspruch 8, dadurch gekennzeichnet, daß daß der gemischte Kristall ein gemischter Kristall ist, erhalten durch Verdampfen von zumindest zwei Chinacridonverbindungen, dargestellt durch die Formel (I), bei einer Sublimationstemperatur oder höher im Vakuum und durch Rekoagulieren des Dampfes auf einem Substrat.

10. Elektrophotographischer Rezeptor nach Anspruch 8, dadurch gekennzeichnet, daß der gemischte Kristall ein gemischter Kristall ist, erhalten durch Auflösen von zumindest zwei Chinacridonverbindungen, dargestellt durch die Formel (I) in einem Lösungsmittel und anschließendes erneutes Ausfällen in einem armen Lösungsmittel.

11. Elektrophotographischer Photorezeptor nach Anspruch 8, dadurch gekennzeichnet, daß der gemischte Kristall ein gemischter Kristall ist, erhalten durch Verdampfen von zumindest zwei Chinacridonverbindungen, dargestellt durch die Formel (I), bei einer Sublimationstemperatur oder höher im Vakuum, Rekoagulieren des Dampfes auf einem Substrat, zur Bildung eines gemischten Kristalls und anschließendes Behandeln des resultierenden gemischten Kristalls in einer Alkylschwefelsäure oder einem organischen Lösungsmittel.

12. Elektrophotographischer Photorezeptor nach Anspruch 8, dadurch gekennzeichnet, daß der gemischte Kristall ein gemischter Kristall ist, erhalten durch Auflösen von zumindest zwei Chinacridonverbindungen,

dargestellt durch die Formel (I), in einem Lösungsmittel, erneutes Ausfällen dieser Verbindung in einem armen Lösungsmittel zur Bildung eines gemischten Kristalls und anschließendes Behandeln des resultierenden gemischten Kristalls in einer Alkylschwefelsäure oder einem organischen Lösungsmittel.

13. Elektrophotographischer Photorezeptor nach Anspruch 8, dadurch gekennzeichnet, daß die Chinacridonverbindungen ausgewählt werden aus Chinacridon, 3-Methylchinacridon, 2-Chlorochinacridon, 4-Chlorochinacridon, 2,9-Dimethylchinacridon, 2,9-Dimethoxychinacridon, 2,9-Dichlorochinacridon, 3, 10-Dimethylchinacridon, 4,11-Dimethylchinacridon, 3,10-Dichlorochinacridon, 2,3-Dichlorochinacridon, 4,11-Dichlorochinacridon, 2,9-Difluorochinacridon, 2,8-Dichlorochinacridon, 6,13-Dichlorochinacridon, 3,10-Dimethoxychinacridon, 4,11-Dimethoxychinacridon, 2-Chloro-4-methylchinacridon, 2,9-Dichloro-4, 11-dimethylchinacridon, 2,10-Dimethyl-6,13-dichlorochinacridon, 2,10-Dichloro-6,13-dihydrochinacridon, 2,9-Dimethyl-6,13-dihydrochinacridon, 2,9-Dimethyl-6,13-dihydrochinacridon, 4,11-Dimethyl-6,13-dihydrochinacridon, 3,4,10,11-Tetrachlorochinacridon, 1,4,8,11-Tetrafluorochinacridon, 2,4,9,11-Tetramethylchinacridon, 1,2,4,8,9,11-Hexachlorochinacridon und 2,4,9,11-Tetramethoxychinacridon.

14. Elektrophotographischer Photorezeptor nach Anspruch 8, dadurch gekennzeichnet, daß die Kombination von zumindest zwei Chinacridonverbindungen eine Kombination aus unsubstituiertem Chinacridon und 2,9-Dimethylchinacridon oder 2,9-Dichlorochinacridon, eine Kombination aus 2,9-Dimethylchinacridon und 2,9-Dichlorochinacridon oder eine Kombination aus 3,10-Dichlorochinacridon und 2,9-Dimethoxychinacridon ist.

## Revendications

1. Utilisation de cristaux mixtes d'une combinaison d'au moins deux dérivés de quinacridone représentés par la formule (I):

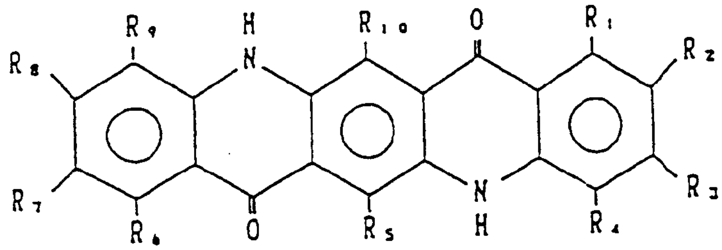

(I)

dans laquelle $R_1$, $R_2$, $R_3$, $R_4$, $R_5$, $R_6$, $R_7$, $R_8$, $R_9$ et $R_{10}$ représentent chacun un atome d'hydrogène ou d'halogène ou un groupe hydroxyle, cyano, nitro, alkyle, alcoxy, amino, sulfo, carboxyle, alkylamino ou alkyle halogéné, comme composant générateur de charges d'un matériau photoconducteur.

2. Utilisation selon la revendication 1, caractérisée en ce que lesdits cristaux mixtes sont des cristaux mixtes obtenus en vaporisant au moins deux dérivés de quinacridone représentés par la formule (I) à la température de sublimation ou au-dessus sous vide et en recoagulant les vapeurs sur un substrat.

3. Utilisation selon la revendication 1, caractérisée en ce que lesdits cristaux mixtes sont des cristaux mixtes obtenus en dissolvant au moins deux dérivés de quinacridone représentés par la formule (I) dans un agent solubilisant et ensuite en les reprécipitant dans un mauvais solvant.

4. Utilisation selon la revendication 1, caractérisée en ce que lesdits cristaux mixtes sont des cristaux mixtes obtenus en vaporisant au moins deux dérivés de quinacridone représentés par la formule (I) à la température de sublimation ou au-dessus sous vide, en recoagulant les vapeurs sur un substrat pour former des cristaux mixtes et ensuite en traitant les cristaux mixtes résultants dans un acide alkylsulfurique ou un solvant organique.

5. Utilisation selon la revendication 1, caractérisée en ce que lesdits cristaux mixtes sont des cristaux mixtes obtenus en dissolvant au moins deux dérivés de quinacridone représentés par la formule (I) dans un agent solubilisant, en les reprécipitant dans un mauvais solvant pour former des cristaux mixtes et ensuite en traitant les cristaux mixtes résultants dans un acide alkylsulfurique ou un solvant organique.

6. Utilisation selon la revendication 1, caractérisée en ce que lesdits dérivés de quinacridone sont choisis parmi les composés suivants : quinacridone, 3-méthylquinacridone, 2-chloroquinacridone, 4-chloroquinacridone, 2,9-diméthylquinacridone, 2,9-diméthoxyquinacridone, 2,9-dichloroquinacridone, 3,10-diméthylquinacridone, 4,11-diméthylquinacridone, 3,10-dichloroquinacridone, 2,3-dichloroquinacridone, 4,11-dichloroquinacridone, 2,9-difluoroquinacridone, 2,8-dichloroquinacridone, 6,13-dichloroquinacridone, 3,10-diméthoxyquinacridone, 4,11-diméthoxyquinacridone, 2-chloro-4-méthylquinacridone, 2,9-dichloro-4,11-diméthylquinacridone, 2,10-diméthyl-6,13-dichloroquinacridone, 2,10-dichloro-6,13-dihydroquinacridone, 2,9-diméthoxy-6,13-dihydroquinacridone, 2,9-diméthyl-6,13-dihydroquinacridone, 4,11-diméthyl-6,13-dihydroquinacridone, 3,4,10,11-tétrachloroquinacridone, 1,4,8,11-tétrafluoroquinacridone, 2,4,9,11-tétraméthylquinacridone, 1,2,4,8,9,11-hexachloroquinacridone et 2,4,9,11-tétraméthoxyquinacridone.

7. Utilisation selon la revendication 1, caractérisée en ce que ladite combinaison d'au moins deux dérivés de quinacridone est une combinaison de la quinacridone non substituée et de 2,9-diméthylquinacridone ou de 2,9-dichloroquinacridone, une combinaison de 2,9-diméthylquinacridone et de 2,9-dichloroquinacridone ou une combinaison de 3,10-dichloroquinacridone et de 2,9-diméthoxyquinacridone.

8. Photorécepteur électrophotographique caractérisé en ce qu'il comprend un support portant une couche photosensible contenant des cristaux mixtes d'une combinaison d'au moins deux dérivés de quinacridone représentés par la formule (I):

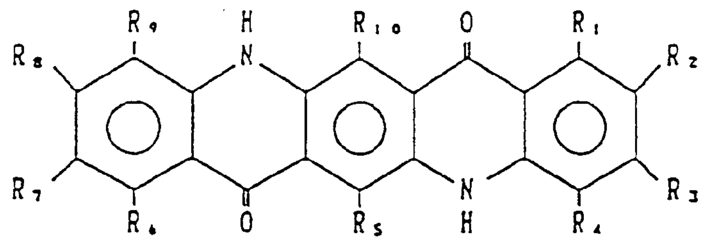

(I)

dans laquelle $R_1$, $R_2$, $R_3$, $R_4$, $R_5$, $R_6$, $R_7$, $R_8$, $R_9$ et $R_{10}$ représentent chacun un atome d'hydrogène ou d'halogène ou un groupe hydroxyle, cyano, nitro, alkyle, alcoxy, amino, sulfo, carboxyle, alkylamino ou alkyle halogéné.

9. Photorécepteur électrophotographique selon la revendication 8, caractérisé en ce que lesdits cristaux mixtes sont des cristaux mixtes obtenus en vaporisant au moins deux dérivés de quinacridone représentés par la formule (I) à la température de sublimation ou au-dessus sous vide et en recoagulant les vapeurs sur un substrat.

10. Photorécepteur électrophotographique selon la revendication 8, caractérisé en ce que lesdits cristaux mixtes sont des cristaux mixtes obtenus en dissolvant au moins deux dérivés de quinacridone représentés par la formule (I) dans un agent solubilisant et ensuite en les reprécipitant dans un mauvais solvant.

11. Photorécepteur électrophotographique selon la revendication 8, caractérisé en ce que lesdits cristaux mixtes sont des cristaux mixtes obtenus en vaporisant au moins deux dérivés de quinacridone représentés par la formule (I) à la température de sublimation ou au-dessus sous vide, en recoagulant les vapeurs sur un substrat pour former des cristaux mixtes et ensuite en traitant les cristaux mixtes résultants dans un acide alkylsulfurique ou un solvant organique.

12. Photorécepteur électrophotographique selon la revendication 8, caractérisé en ce que lesdits cristaux mixtes sont des cristaux mixtes obtenus en dissolvant au moins deux dérivés de quinacridone représentés par la formule (I) dans un agent solubilisant, en les reprécipitant dans un mauvais solvant pour former des cristaux mixtes et ensuite en traitant les cristaux mixtes résultants dans un acide alkylsulfurique ou un solvant organique.

13. Photorécepteur électrophotographique selon la revendication 8, caractérisé en ce que lesdits dérivés de quinacridone sont choisis parmi les composés suivants : quinacridone, 3-méthylquinacridone, 2-chloroquinacridone, 4-chloroquinacridone, 2,9-diméthylquinacridone, 2,9-diméthoxyquinacridone, 2,9-dichloroquinacridone, 3,10-diméthylquinacridone, 4,11-diméthylquinacridone, 3,10-dichloroquinacridone, 2,3-dichloroquinacridone, 4,11-dichloroquinacridone, 2,9-difluoroquinacridone, 2,8-dichloroquinacridone, 6,13-dichloroquinacridone, 3,10-diméthoxyquinacridone, 4,11-diméthoxyquinacridone, 2-chloro-4-méthylquinacridone, 2,9-dichloro-4,11-diméthylquinacridone, 2,10-diméthyl-6,13-dichloroquinacridone, 2,10-dichloro-6,13-dihydroquinacridone, 2,9-diméthoxy-6,13-dihydroquinacridone, 2,9-diméthyl-6,13-dihydroquinacridone, 4,11-diméthyl-6,13-dihydroquinacridone, 3,4,10,11-tétrachloroquinacridone, 1,4,8,11-tétrafluoroquinacridone, 2,4,9,11-tétraméthylquinacridone, 1,2,4,8,9,11-hexachloroquinacridone et 2,4,9,11-tétraméthoxyquinacridone.

**14.** Photorécepteur électrophotographique selon la revendication 8, caractérisé en ce que ladite combinaison d'au moins deux dérivés de quinacridone est une combinaison de la quinacridone non substituée et de 2,9-diméthylquinacridone ou de 2,9-dichloro-quinacridone, une combinaison de 2,9-diméthylquinacridone et de 2,9-dichloro-quinacridone ou une combinaison de 3,10-dichloroquinacridone et de 2,9-diméthoxyquinacridone.

F I G U R E 1

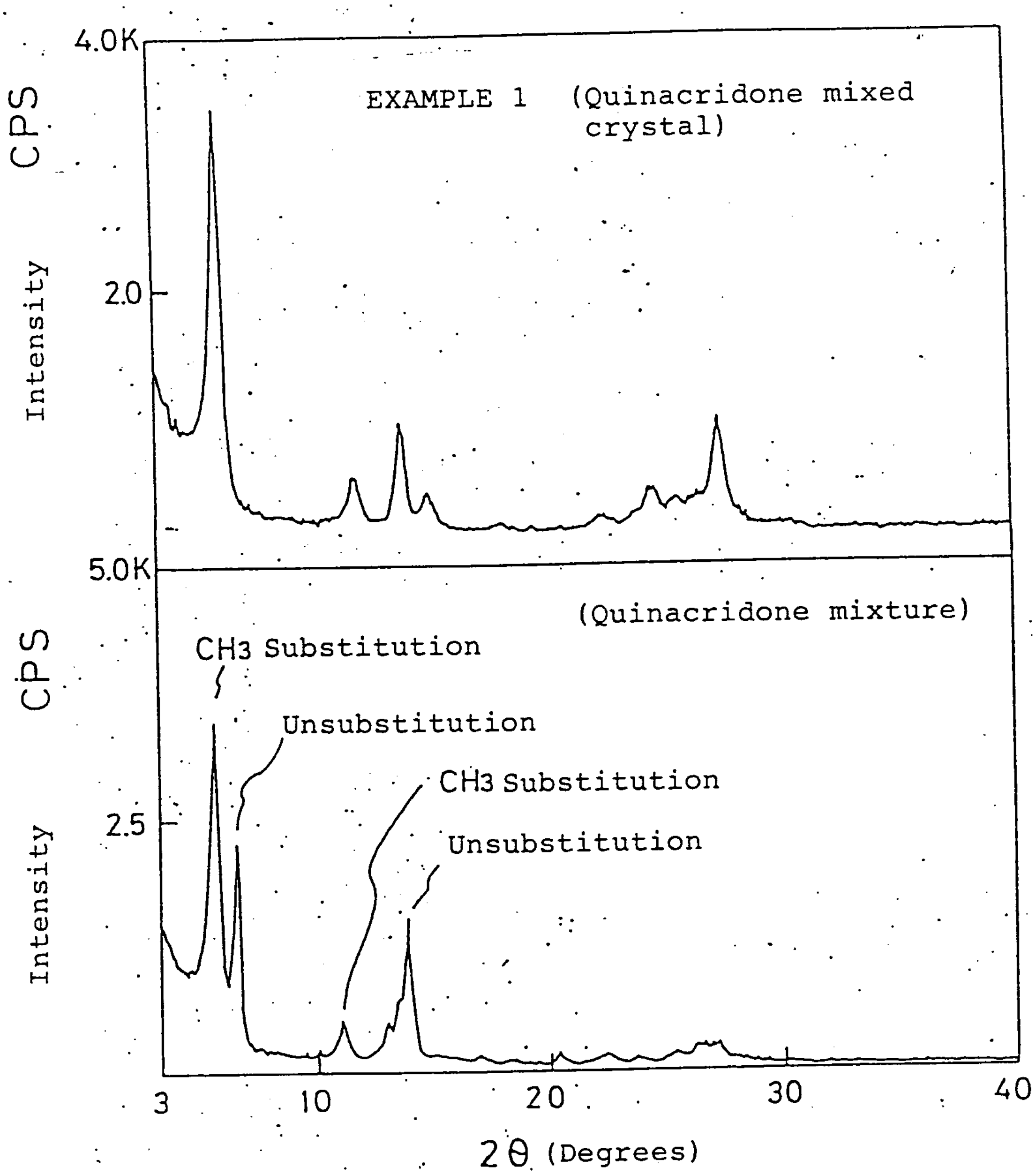
4.0K
CPS
Intensity
2.0
EXAMPLE 1 (Quinacridone mixed crystal)
5.0K
CPS
Intensity
2.5
(Quinacridone mixture)
CH3 Substitution
Unsubstitution
CH3 Substitution
Unsubstitution
3
10
20
30
40
2θ (Degrees)

FIGURE 2

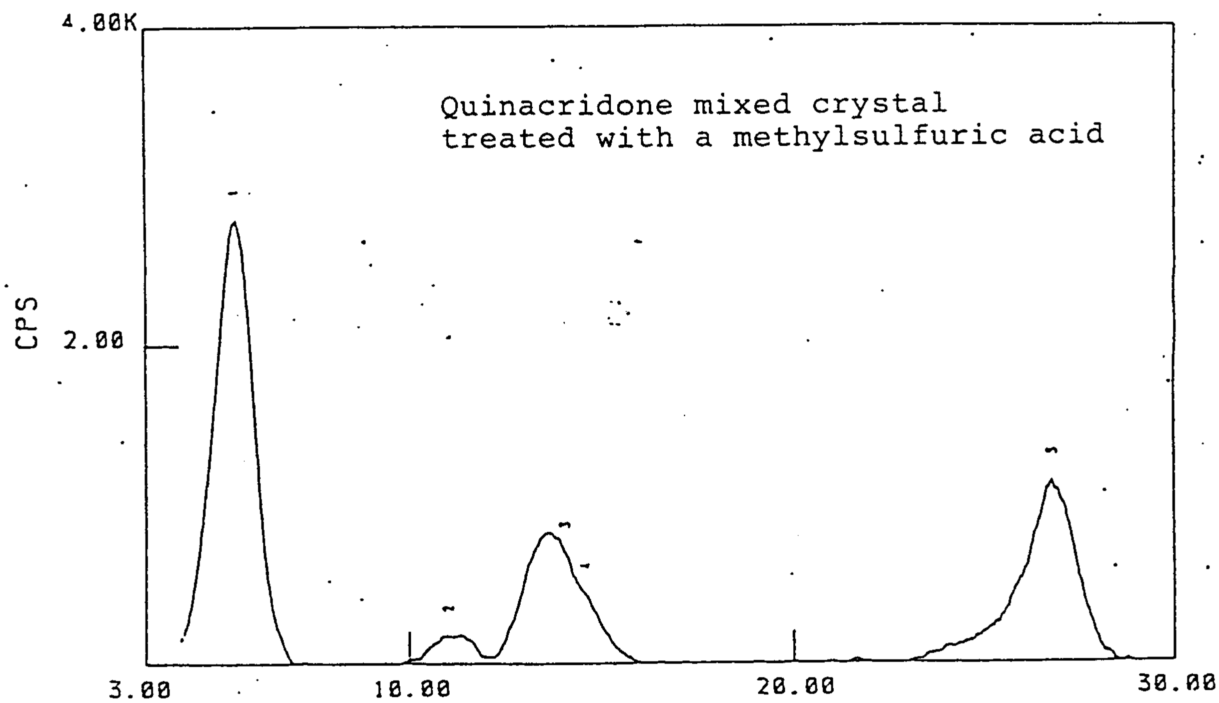
4.00K
2.00
CPS
Quinacridone mixed crystal
treated with a methylsulfuric acid
3.00
10.00
20.00
30.00

FIGURE 3

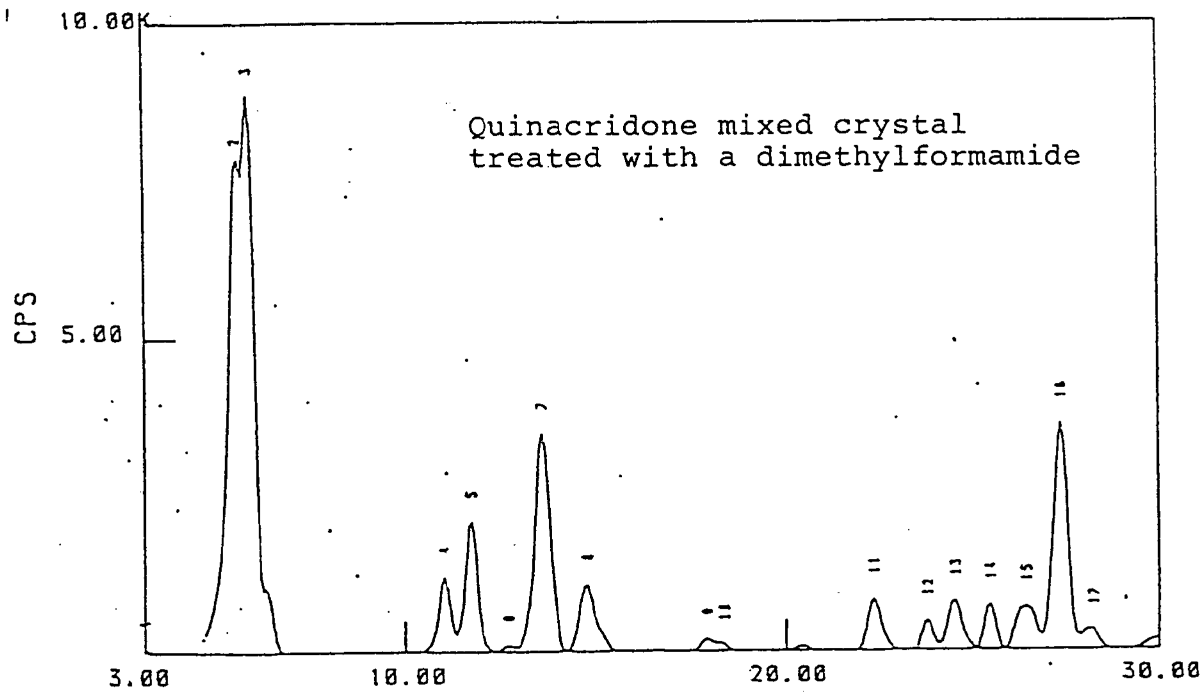
10.00K
CPS
5.00
Quinacridone mixed crystal
treated with a dimethylformamide
3.00
10.00
20.00
30.00